# EUROPÄISCHE PATENTSCHRIFT

(11) **EP 0 991 164 B1**
(45) Veröffentlichungstag und Bekanntmachung des Hinweises auf die Patenterteilung: **03.07.2002**
(21) Anmeldenummer: 99119234.5
(22) Anmeldetag: 28.09.1999
(51) Int. Cl.: H02K 3/28, H02K 21/02, H02K 3/12

(54) **Bürstenlose Elektromaschine, insbesondere an ein Kraftfahrzeug-Bordnetz anschliessbarer Starter-Generator**
Brushless electric machine, in particular starter-generator connectable to the on-board electric network of a vehicle
Machine électrique sans balai, notamment démarreur-alternateur connectable à un réseau d'alimentation élèctrique de bord d'un véhicule

(30) Priorität: 02.10.1998 DE 19845520
(43) Veröffentlichungstag der Anmeldung: 05.04.2000
(73) Patentinhaber: SIEMENS AKTIENGESELLSCHAFT, 80333 München (DE)
(72) Erfinder: Altenbernd, Gerald, Dr.-Ing., 30455 Hannover (DE); Wähner, Ludwig, Dipl.-Ing., 97234 Reichenberg (DE)

(56) Entgegenhaltungen:
- AT-B- 101 170
- DE-A- 4 122 076
- US-A- 3 432 707
- PATENT ABSTRACTS OF JAPAN vol. 6, no. 123 (E-117), 8. Juli 1982 (1982-07-08) -& JP 57 052336 A (TOSHIBA CORP), 27. März 1982 (1982-03-27)
- PATENT ABSTRACTS OF JAPAN vol. 1997, no. 12, 25. Dezember 1997 (1997-12-25) -& JP 09 219948 A (MEIDENSHA CORP), 19. August 1997 (1997-08-19)
- SEQUENZ, HEINRICH: "Die Wicklungen elektrischer Maschinen" 1950 , SPRINGER-VERLAG , WIEN XP000926301 1 * Seite 4-8 *

## Beschreibung

Bürstenlose Elektromaschine, insbesondere an ein Kraftfahrzeug-Bordnetz anschließbarer Starter-Generator

Die Erfindung bezieht sich auf eine bürstenlose Elektromaschine, insbesondere auf einen an ein Kraftfahzeug-Bordnetz anschließbaren Starter-Generator, gemäß Patentanspruch 1; weitere vorteilhafte Anwendungsbereiche sind motorische Antriebe für "brake by wire" bzw. "steering by wire" in Kraftfahrzeugen.

Beim Einsatz von bürstenlosen elektrischen Maschinen, insbesondere Induktionsmaschinen und Synchronmaschinen, ergeben sich vor allem bei Anschluß an Kleinspannungen, vorzugsweise an Kraftfahrzeug-Kleinspannungen von 12 Volt bzw. 42 Volt, zur Erzielung eines guten Leistungsfaktors bei hohem Anfahrdrehmoment für die statorseitige Wicklung Windungszahlen von W = 1, 2, 3.

Gemäß vorliegender Erfindung kann auf insbesondere fertigungstechnisch einfache Weise eine darüber hinaus noch bessere und für den Einzelfall individuellere Auslegung der Drehmoment-Drehzahl-Kennlinie dadurch erreicht werden, daß zumindest einer der Stränge einer m-strängigen Statorwicklung eine unganzzahlige bzw. gebrochene kleine Windungszahl W pro Pol und/oder pro Polpaar, insbesondere W = 1,5; 2,5; 3;5 aufweist und in fertigungstechnisch vorteilhafter Weise zur Erzielung dieser gebrochenen bzw. unganzzahligen Windungszahl jeweils pro Pol und/oder pro Polpaar zumindest eine Spule mit zumindest drei Spulenseiten vorgesehen ist, von denen in einer ersten Nut eines Statorblechpaketes der größere Teil der Spulenseiten und in einer zweiten Nut der restliche Teil der Spulenseiten aufgenommen ist.

Die Nuträume bzw. Nutfläche der jeweils ersten bzw. zweiten Nut sind im Sinne einer minimalen Streuung bzw. maximalen Nutfüllung entsprechend der Zahl der von ihr aufgenommenen Spulenseiten dimensioniert.

Die ersten und zweiten Nuten sind zweckmäßigerweise abwechselnd über den Umfang des Statorblechpaketes verteilt; eine derartige Verteilung der Nuten bringt zusätzlich, insbesondere bei einer bevorzugt vorgesehenen Wellenwicklung (Mäanderwicklung), den Vorteil einer einfacheren bzw. kompakteren Wickelkopfbildung.

Eine elektrische Maschine mit in regelmäßig oder vorwiegend regelmäßig abwechselnder Folge mit verschiedenen Leiterzahlen, insbesondere mit Leiterstäben, belegten Nuten und entsprechend abwechselnden verschiedenen Nutformen ist durch die AT-B-101 170 bekannt; durch diese Maßnahme sollen einander widersprechende Forderungen in Bezug auf Nutenzahl und Nutengröße gelöst werden, die insbesondere bei Synchronmaschinen großer Leistung mit Zwang zu kleinster Leiterzahl je Nut gegeben sind.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:
- FIG 1: die axiale Draufsicht auf ein Statorblech mit m = 3 Strängen mit insgesamt 72 Nuten und q = 2 Nuten pro Pol und Strang sowie einer Polpaarzahl p = 6 in einer beispielsweisen Bewicklung für nur einen Strang U-X;
- FIG 2: die Abwicklung des Bohrungsumfanges des Statorbleches gemäß FIG 1 mit zugehörigem Wicklungsschema;
- FIG 3: die Induktionsverteilung B (x;t) über den abgewickelten Bohrungsumfang des Statorbleches gemäß FIG 1 bzw. FIG 2.

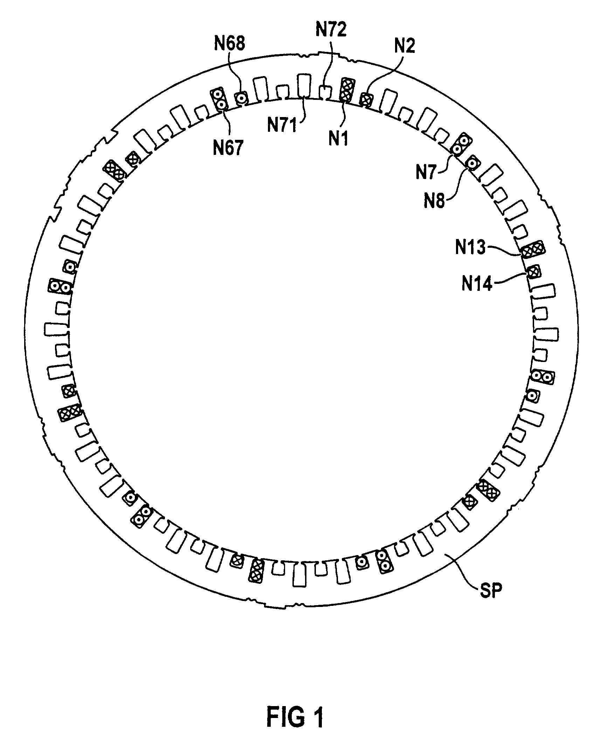

FIG 1 zeigt die axiale Draufsicht auf ein Statorblech des Statorblechpaketes SP eines Starter-Generators, der z.B. zwischen einer Verbrennungsmaschine und einem nachgeschalteten Getriebe konzentrisch zur Kurbelwelle und gegebenenfalls in zusätzlicher Funktion einer Schwungscheibe einsetzbar ist.

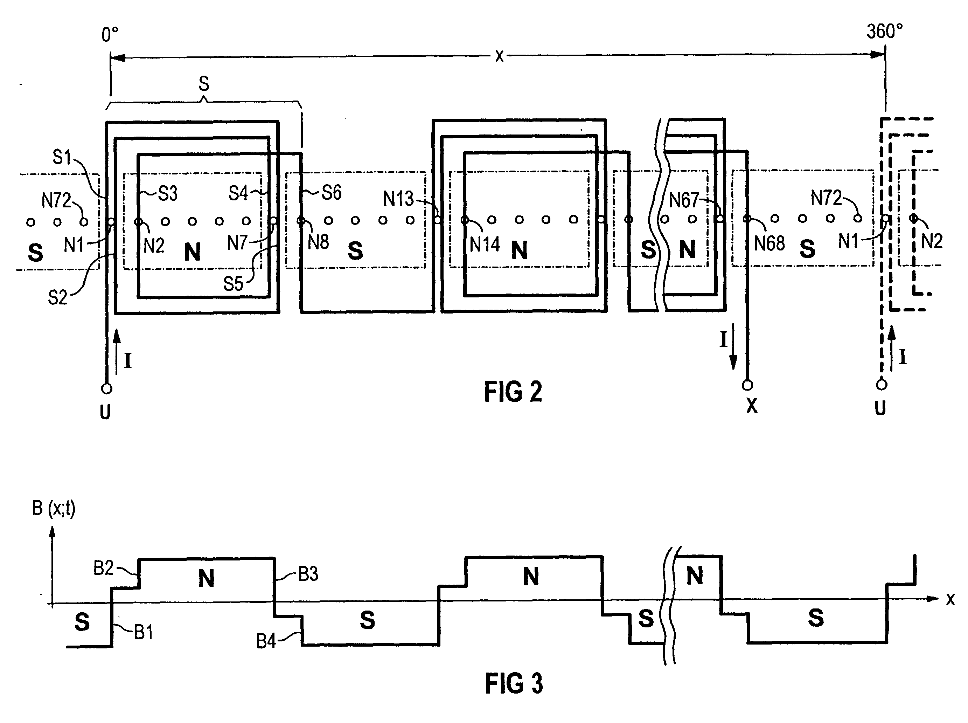

Das Ausführungsbeispiel zeigt den Prinzip-Aufbau für eine m = 3-strängige Wicklung einer symmetrischen Drehstrommaschine mit q = 2 Nuten pro Pol und Strang sowie p = 6 Polpaaren und z = 36 magnetisch wirksamen Leitern pro Strang sowie 2 · p · m · q = 72 Nuten N1-N72; im Wicklungsschema gemäß FIG 2 ist nur ein von einem Strom I durchflossener Strang U-X einer mit einem Wicklungsschritt von 6 Nuten für die jeweils in Reihe geschalteten, vorzugsweise mit einem Nadelwickler zusammenhängend, d.h. ohne Löt- bzw. Schweißverbindungen, in einem Arbeitsgang durchwickelbaren Spulen S dargestellt; jede Spule S weist dabei insgesamt drei linke Spulenseiten S1;S2;S3 und drei rechte Spulenseiten S4;S5;S6 auf. Die zugehörige Polverteilung ist mit strichpunktierter Kontur angedeutet.

Erfindungsgemäß ist zumindest eine Wicklung mit der gebrochenen bzw. ganzzahligen Windungszahl W = 1,5 dadurch verwirklicht, daß pro Polpaar in jeweils einer ersten Nut N1 bzw.N7 usw. zwei Spulenseiten S1;S2 bzw. S4;S5 und in einer zweiten Nut N7;N19 usw. die verbleibende Spulenseite S3 bzw. S6 eingewickelt sind; damit ergeben sich pro Polpaar und Strang mit der angenommenen und verteilten Spule S drei Windungen W = 3 und somit eine magnetisch wirksame Windungszahl pro Pol von W = 1,5. Die zugehörige Nutdurchflutung ist dadurch gekennzeichnet, daß diese bei Betrachtung eines Stranges für sämtliche, mit Stromleitern belegten Nuten betragsmäßig nicht konstant ist und sich - bei mehreren Spulen - periodisch über den Bohrungsumfang wiederholt.

Der sich aufgrund der Wicklungs-Belegung in FIG 2 ergebende zugehörige Induktionsverlauf B (x;t) über den Bohrungsumfang x (0°-360° geometrisch) ist in FIG 3 dargestellt; kennzeichnend ist hierbei ein gestufter Verlauf mit periodisch unterschiedlichen Stufenhöhen B1 zu B2 bzw. B3 zu B4 in der jeweils steigenden bzw. fallenden Flanke.

Anstelle der in FIG 2 gezeigten Reihenschaltung der Wicklungen eines Stranges U-X kann auch eine Parallelschaltung der Spulen bzw. Spulengruppen und/oder eine gemischte Schaltung von Reihenschaltung und Parallelschaltung unter Beachtung der Phasenlage vorgesehen werden.

FIG 1 zeigt den Blechschnitt eines Statorbleches mit insgesamt N1-N72 = 2 · p · m · q = 72 Ständernuten mit entsprechend dem Wicklungsschema nach FIG 2 mit Spulenseiten belegten Nuten. Im Sinne einer optimalen Nutfüllung und damit minimalen Streuung sind alternativ unterschiedlich große, der Zahl der jeweils aufgenommenen Spulenseiten angepaßte, Nuten über den Bohrungsumfang x = 0°-360°geometrisch verteilt. Anstelle des im Ausführungsbeispiel nach FIG 2 vorgesehenen alternativen Wechsels zwischen einer großen, zwei Spulenseiten einer Spule aufnehmenden und einer anschließenden kleinen, nur die eine verbleibende Spulenseite der Spule aufnehmenden Nut kann auch ein anderer Wechsel der Nutverteilung, z.B. große Nut - kleine Nut - kleine Nut - große Nut usw., vorgesehen sein.

## Patentansprüche

1. Bürstenlose Elektromaschine, insbesondere an ein Kraftfahrzeug-Bordnetz anschließbarer Starter-Generator,
- mit einer m-strängigen Statorwicklung;
- mit zumindest einer Stator-Spule (S) mit jeweils zumindest drei Spulenseiten (S1;S2;S3 bzw. S4;S5;S6) pro Pol und/oder Polpaar;
- mit einer kleinen unganzzahligen Windungszahl (W), insbesondere W = 1,5; 2,5; 3,5, pro Pol und/oder Polpaar;
- mit einem in Nuten (N1-N72) die m-strängige Statorwicklung aufnehmenden Statorblechpaket (SP);
- mit jeweils zumindest einer ersten, den größeren Teil der Spulenseiten (S1;S2 bzw. S4;S5) aufnehmenden Nut (N1) und einer zweiten, den restlichen Teil der Spulenseiten (S3;S6) aufnehmenden Nut (N2).

2. Bürstenlose Elektromaschine nach Anspruch 1
- mit zumindest drei Spulenseiten (S1;S2;S3 bzw.S4;S5;S6) pro Pol und/oder pro Polpaar für die eine Spule (S);
- mit einer ersten, zwei Spulenseiten (S1;S2 bzw.S4;S5) aufnehmenden Nut (N1) und einer zweiten, die restliche Spulenseite (S3 bzw.S6) aufnehmenden Nut (N2).

3. Bürstenlose Elektromaschine nach Anspruch 1 und/oder 2
- mit im Sinne einer minimalen Streuung bzw. maximalen Nutfüllung jeweils der Zahl der eingewickelten Spulenseiten angepaßten Nutfläche der ersten Nut (N1) bzw. zweiten Nut (N2).

4. Bürstenlose Elektromaschine nach zumindest einem der Ansprüche 1-3
- mit einer wechselweisen Anordnung der ersten Nuten (N1) und zweiten Nuten (N2) über den Umfang des Statorblechpakets (SP).

5. Bürstenlose Elektromaschine nach zumindest einem der Ansprüche 1-4
- mit einer, insbesondere dreiphasige, Asynchronmaschine bzw. Synchronmaschine.

6. Bürstenlose Elektromaschine nach zumindest einem der Ansprüche 1-5
- mit Anschluß an ein Kleinspannungsnetz, insbesondere ein Kraftfahrzeug-Bordnetz.

7. Bürstenlose Elektromaschine nach zumindest einem der Ansprüche 1-6,
- mit Verwendung für einen Starter-Generator, insbesondere im Antriebsstrang eines Kraftfahrzeuges.

8. Bürstenlose Elektromaschine nach zumindest einem der Ansprüche 1-7
- mit einer Verwendung für einen elektrischen Lenkantrieb ("steering by wire") und/oder einen elektrischen Bremsantrieb ("brake by wire") in einem Kraftfahrzeug.

## Claims

1. A brushless electric machine, in particular a starter generator capable of being connected to an on-board supply system of a motor vehicle,
- with an m-phase stator winding;
- with at least one stator coil (S) with, in each case, at least three coil sides (S1;S2;S3 and S4;S5;S6, respectively) per pole and/or pole pair;
- with a small non-integral number of turns (W), in particular W = 1.5; 2.5; 3.5 per pole and/or pole pair;
- with a stator iron core (SP) receiving the m-phase stator winding in grooves (N1-N72);
- with, in each case, at least one first groove (N1) receiving the greater part of the coil sides (S1;S2 and S4;S5, respectively) and with a second groove (N2) receiving the remaining part of the coil sides (S3;S6).

2. Brushless electric machine according to Claim 1
- with at least three coil sides (S1;S2;S3 and S4;S5;S6, respectively) per pole and/or per pole pair for the one coil (S) ;
- with a first groove (N1) receiving two coil sides (S1;S2 and S4;S5, respectively) and with a second groove (N2) receiving the remaining coil side (S3 and S6, respectively).

3. Brushless electric machine according to Claim 1 and/or 2
- with a groove surface of the first groove (N1) or second groove (N2), which is adapted, in the sense of a minimal spreading or maximal groove filling, respectively, to the number of wrapped coil sides in each case.

4. Brushless electric machine according to at least one of Claims 1-3
- with an alternate arrangement of the first grooves (N1) and second grooves (N2) over the periphery of the stator iron core (SP).

5. Brushless electric machine according to at least one of Claims 1-4
- with an asynchronous machine or synchronous machine, in particular a three-phase asynchronous machine or synchronous machine.

6. Brushless electric machine according to at least one of Claims 1-5
- with connection to a low-voltage network, in particular an on-board supply system of a motor vehicle.

7. Brushless electric machine according to at least one of Claims 1-6
- with application for a starter generator, in particular in the driveline of a motor vehicle.

8. Brushless electric machine according to at least one of Claims 1-7
- with an application for an electric steering drive ("steering by wire"") and/or for an electric braking drive ("brake by wire") in a motor vehicle.

## Revendications

1. Machine électrique sans balai, notamment démarreur-alternateur connectable à un réseau de bord de véhicule automobile,
- ayant un enroulement statorique à m phases ;
- ayant au moins une bobine de stator (S) ayant respectivement au moins trois côtés de bobine (S1 ; S2 ; S3 ou S4 ; S5; S6) par pôle et/ou par paire de pôles ;
- ayant un petit nombre de spires (W) non entier, notamment W = 1,5 ; 2,5 ; 3,5 par pôle et/ou par paire de pôles ;
- ayant un empilement de tôles statoriques (SP) logeant dans des gorges (N1 à N72) l'enroulement statorique à m phases ;
- ayant respectivement au moins une première gorge (N1) logeant la majeure partie des côtés de bobine (S1 ; S2 ou S4 ; S5) et une deuxième gorge (N2) logeant la partie restante des côtés de bobine (S3 ; S6).

2. Machine électrique sans balai selon la revendication 1,
- ayant au moins trois côtés de bobine (S1 ; S2 ; S3 ou S4 ; S5 ; S6) par pôle et/ou par paire de pôles pour une bobine (S) ;
- ayant une première gorge (N1) logeant deux côtés de bobine (S1 ; S2 ou S4 ; S5) et une deuxième gorge (N2) logeant le côté de bobine restant (S3 ou S6).

3. Machine électrique sans balai selon la revendication 1 et/ou 2,
- ayant, en vue d'une dispersion minimale ou d'un remplissage de gorge maximal, une surface de gorge, adaptée respectivement au nombre des côtés de bobine enroulés, de la première gorge (N1) ou de la deuxième gorge (N2).

4. Machine électrique sans balai selon au moins l'une des revendications 1 à 3,
- ayant une disposition alternée des premières gorges (N1) et des deuxièmes gorges (N2) sur la circonférence de l'empilement de tôles statoriques (SP).

5. Machine électrique sans balai selon au moins l'une des revendications 1 à 4,
- ayant une machine asynchrone ou synchrone, notamment triphasée.

6. Machine électrique sans balai selon au moins l'une des revendications 1 à 5,
- avec raccordement à un réseau de petite tension, notamment un réseau de bord de véhicule automobile.

7. Machine électrique sans balai selon au moins l'une des revendications 1 à 6,
- avec utilisation pour un démarreur-alternateur, notamment dans la phase destinée à l'entraînement d'un véhicule automobile.

8. Machine électrique sans balai selon au moins l'une des revendications 1 à 7,
- avec utilisation pour un entraînement électrique de direction ("steering by wire") et/ou pour un entraînement électrique de freinage ("brake by wire") dans un véhicule automobile.
